# EUROPÄISCHE PATENTSCHRIFT

(11) **EP 1 110 024 B1**
(45) Veröffentlichungstag und Bekanntmachung des Hinweises auf die Patenterteilung: **31.08.2005**
(21) Anmeldenummer: 00918646.1
(22) Anmeldetag: 28.04.2000
(51) Int. Cl.: F16L 55/28, F16L 55/26

(54) **VERSPANNVORRICHTUNG FÜR FRÄSGERÄT IN DER ROHRREINIGUNGS- UND ROHRSANIERUNGSTECHNIK**
BLOCKING DEVICE FOR A MILLING MACHINE USED IN PIPE CLEANING AND PIPE RESTORATION
DISPOSITIF DE BLOCAGE POUR APPAREIL DE FRAISAGE UTILISE DANS LA TECHNIQUE DE NETTOYAGE ET DE RENOVATION DE TUYAUX

(30) Priorität: 29.04.1999 CH 79299
(43) Veröffentlichungstag der Anmeldung: 27.06.2001
(73) Patentinhaber: Winiger, Gerhard, 8636 Wald (CH)
(72) Erfinder: Winiger, Gerhard, 8636 Wald (CH)
(86) Internationale Anmeldenummer: PCT/CH2000/000237
(87) Internationale Veröffentlichungsnummer: WO 2000/066932

(56) Entgegenhaltungen:
- EP-A- 0 084 427
- WO-A-97/14910
- DE-A- 1 625 962
- DE-A- 3 605 233
- US-A- 4 819 721

## Beschreibung

Die Erfindung gemäss dem Oberbegriff des 1. Patentanspruchs betrifft eine Verspannvorrichtung für die Fixierung eines Fräsgeräts im Rohr, um mit dem Fräsgerät Hindernisse oder Sanierungsmaterial weg- bzw. auszufräsen.
In der Rohrreinigungs- und Rohrsanierungstechnik ist eine erhebliche Anzahl von unterschiedlichen Fräsgeräten bekannt, die zur Entfernung von festen Ablagerungen, einragenden Anschlussrohren und anderen Abflusshindernissen wie z.B. Wurzeleinwuchs dienen. In der Inliner-Rohrsanierungstechnik wie in US Pat. 4,009,063 und 4,067,211 beschrieben, sind Fräsgeräte für die Abschlussarbeiten wie z.B. das Öffnen der Seiteneinläufen von Anschlussrohren beschrieben. Ein besonders einfaches Fräsgerät, das nur mit Druckluft betrieben wird und bogengängig ist, wird in PCT/CH99/00540 vorgeschlagen. Dabei wird der Spannkörper für eine exakte Fräserführung und zur Aufnahme der auftretenden Kräfte mit radial angeordneten Pneumatikzylindern im Rohr verspannt. Die H-förmige Bauweise mit schlankem Mittelteil ermöglicht die Bogengängigkeit. Die vorgeschlagene radiale Anordnung der Pneumatikzylinder bedingt einen Mindestdurchmesser des Spannkörpers für die Ausbildung der entsprechenden Zylinderbohrungen, da die im Innenteil des Spannkörpers geführte Hubstange mit Pneumatikkolben aus Festigkeitsgründen bzw. wegen der Mindestkolbenfläche zur Erzielung der notwendigen Kolbenkraft nicht beliebig verkleinert werden kann. Hierdurch ist diese vorgeschlagene Verspannung des Fräsgeräts mittels radial angeordneten Kolben auf eine Mindestbaugrösse angewiesen. Somit kann mit der vorgeschlagenen Ausbildung des Spannkörpers das Fräsgerät im Bereich von kleineren Rohren nicht eingesetzt werden. Ein weiterer Nachteil dieser vorgeschlagenen Verspannung des Spannkörpers ist darin zu sehen, dass der Spannkörper je nach Rohrgegebenheit (Versatz, Einbrüche u.a.) nicht konzentrisch im Innenrohr verspannt, da die einzelnen Pneumatikkolben, obwohl gleichzeitig mit Druckluft beaufschlagt, individuell arbeiten. Hierdurch kann die radiale oder axiale freie Beweglichkeit der Fräserführung behindert sein oder das Fräsgerät kann aufgrund seiner exzentrischer Lage radial zu wenig tief in die Rohrwand fräsen.
Hier will die Erfindung Abhilfe schaffen. Die Erfindung, wie sie in den Ansprüchen gekennzeichnet ist, löst die Aufgabe, eine einfache Verspannvorrichtung für ein bogengängiges Fräsgerät mit geringen radialen Baumassen und mit zwangsweiser konzentrischer Verspannung im Rohr verfügbar zu machen.

In Abweichung von der bisher vorgeschlagenen Art, zur Verspannung des Fräsgeräts im Rohr an einem Spannkörper radial angeordnete Pneumatikzylinder auszubilden, sieht die besonders einfache und in den radialen Abmessungen minimierte Konstruktion der Erfindung vor, einen axial beweglichen Ringkolben mit radial angeordnete Schubstreben, über einen Kniehebel mit Spannarmen zu verbinden, so dass bei Druckbeaufschlagung auf den Ringkolben die Spannarme den Spannkörper konzentrisch im Rohr fixieren. Im ungespannten Zustand resultiert somit eine im Durchmesser schlanke Bauform, die im gespannten Zustand je nach Kniehebelverhältnis den gewünschten Spannbereich ergibt. Erfindungsgemäss ist zudem vorgesehen, zwei Spannvorrichtungen spiegelbildlich am Spannkörper anzuordnen, derart, dass im gespannten Zustand der Spannkörper durch eine annähernd X-förmige Abstützung im Rohr fixiert wird. Die Druckluftbeaufschlagung der beiden spiegelbildlich angeordneten Ringkolben erfolgt über Kolbenspeisbohrungen in der Führungsstange und im Spannkörper sowie über einen Ringspalt zwischen Spannkörper und Führungsstange. Die Spannarme sind erfindungsgemäss endig mit einem durchgehenden Bolzen am Spannkörper drehbar gelagert und am Kopf abgerundet und mit einer Bohrung zur Aufnahme eines Bolzens zur drehbaren Verbindung mit der Schubstrebe versehen, die ihrerseits mittels Bolzen drehbar im Ringkolben gelagert ist. Die radiale Spreizung der Spannarme erfolgt erfindungsgemäss über die zwischen Ringkolben und Schubstrebe einerseits und die zwischen Schubstrebe und Spannarm andererseits gebildeten drehbaren Verbindungen, die einen Kniehebel bilden. Die Abdichtung zwischen Ringkolben und Spannkörper übernehmen O-Ringe. Bei Druckluftbeaufschlagung auf den Ringkolben fahren die Schubstreben radial nach aussen und drücken somit die mit ihnen verbundene Spannarme gemeinsam radial nach aussen. Zur Entspannung des Spannkörpers ist erfindungsgemäss vorgesehen, zwischen Ringkolben und Führungsrohr radial angeordnete Druckfedern einzubauen, so dass bei Druckwegfall die Ringkolben durch die Druckfedern zurückgedrückt werden und gleichzeitig die Spannarme radial zurückfahren. Dabei ist zu beachten, dass die Kolbenkraft des Ringkolbens, gebildet durch die Kolbenringfläche und die darauf wirkende Pneumatikdruckkraft, grösser als die durch das Druckfederpaket gebildete Kraft sein muss um das Verspannen der Spannarme zu ermöglichen. In speziellen Anwendungsfällen kann es auch von Vorteil sein, anstelle von Druckluft Hydrauliköl zu verwenden um z.B. mit einer geringeren Kolbenfläche und entsprechend höherem Druck arbeiten zu können. In diesem Fall sind die nur wegen der viel grösseren Viskosität des Arbeitsmediums die Kolbenspeisbohrungen entsprechend zu vergrössern.

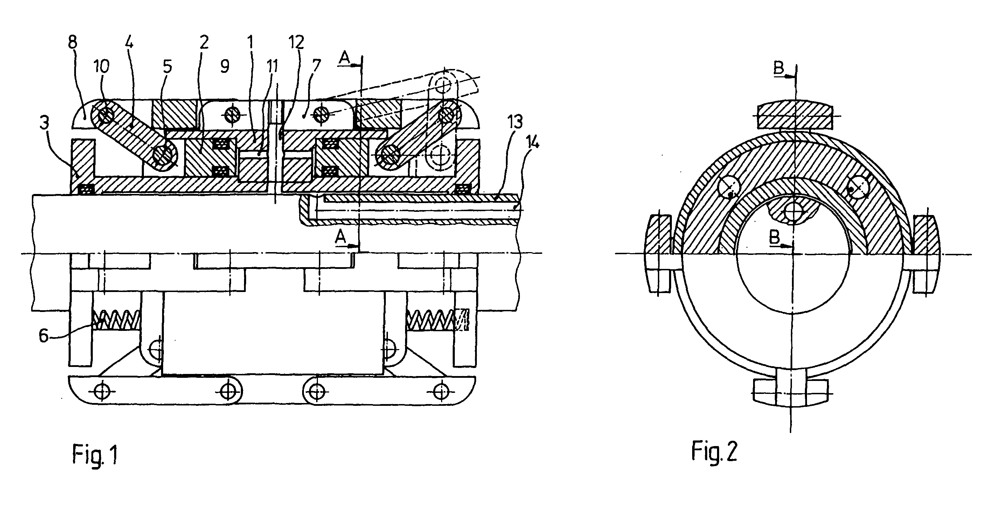

Im folgenden wird die Erfindung anhand von lediglich einen Ausführungsweg darstellenden Zeichnungen näher erläutert. Es zeigen
- Fig. 1: die Ansicht und den Halbschnitt A-A durch die Spannvorrichtung
- Fig. 2: die Stirnansicht und den Halbschnitt B-B durch die Spannvorrichtung
In den Figuren ist eine Spannvorrichtung für ein Fräsgerät in der Rohrreinigungs- und Rohrsanierungstechnik für das Wegfräsen von Hindernissen oder zum Öffnen von Seiteneinläufen von Anschlussrohren nach der Inliner-Sanierung dargestellt, welche in ihrem grundsätzlichen Aufbau aus einem rohrförmigen Spannkörper 1, der von beiden Seiten symmetrisch bis auf ein Mittelstück zur Aufnahme der Ringkolben 2 ausgedreht ist, besteht. Die Tiefe der Ausdrehungen kann dabei 50-90 %, vorzugsweise 70-80% der Höhe des Ringkolbens betragen. Im verbleibenden dickwandigen zylinderischen Mittelteil des Spannkörpers werden die beiden flanschförmigen Führungsrohre 3 mit aufgeschobenen Ringkolben 2 mit der Vorderseite zum Mittelteil hin spiegelbildlich fixiert. Die beiden Ringkolben 2 weisen einen Zylindermantel auf, dessen Innendurchmesser geringfügig grösser ist als der Aussendurchmesser des Führungsrohres 3 und dessen Aussendurchmesser geringfügig kleiner ist als der Innendurchmesser des ausgedrehten Spannkörpers 1. An der Vorderseite des Ringkolbens 2 sind zu Abdichtungszwecken gegenüber dem Spannkörper 1 bzw. gegenüber dem Führungsrohr 3 in den Zylindermantel auf der äusseren und auf der inneren Seite Nuten ausgedreht zur Aufnahme von Dichtelementen in Form von O-Ringen. An der Rückseite des Ringkolbens 2 durchbrechen vier kreuzförmig ausgefräste Nuten den Zylindermantel, deren Tiefe 20-80%, vorzugsweise 40-60%, der Zylindermantelhöhe betragen und deren Breite geringfügig grösser sein muss als die Breite der Schubstrebe 4. Mittig im rechten Winkel zu den Nuten ist der Zylindermantel zur Fixierung je eines Bolzens 5 für die drehbare Aufnahme der vier Schubstreben 4 tangential durchbohrt. 45° zu den Nuten radial versetzt ist der Zylindermantel kreuzförmig mit vier Sackbohrungen ausgebildet, die zur Aufnahme der vier Druckfedern 6 dienen. Der Spannkörper 1 hat an seinem äusseren Zylindermantel kreuzförmig zwei mal vier spiegelbildlich angeordnete Pratzen 7, die radial mit je einer Bohrung zur Fixierung eines Bolzens 9 versehen sind. An diesen Pratzen 7 werden je ein Spannarm 8 mit einem Bolzen 9 drehbar fixiert. Die Spannarme 8 sind an ihrem vorderen Ende kufenförmig abgerundet und mit einer radialen Bohrung zur drehbaren Fixierung der Schubstrebe 4 mittels Bolzen 10 versehen. Zur rückseitigen Druckbeaufschlagung mit Luft oder einem anderen Medium des Ringkolbens 2 ist im Mittelteil des Spannkörpers eine axiale durchgehende Bohrung 11 ausgebildet, die durch eine zweite radiale Bohrung 12 im Mittelteil durchbrochen wird. Über den Ringspalt, gebildet durch die partiell grössere Ausdrehung des inneren Zylinders der beiden Führungsrohre 3 und der von ihnen umschlossenen verschiebbaren Führungsstange 13, welche eine Bohrung 14 für das Speisen der Druckluft allenfalls Hydrauliköl aufweist, kann nun die Bohrung 12 mit Druckluft allenfalls mit Hydrauliköl beaufschlagt werden. In diesem Fall gleiten nun die beiden Ringkolben 2 axial voneinender weg und drücken über die Kniehebel, gebildet durch die drehbare Verbindung von Ringkolben 2 und Schubstrebe 4 und durch die drehbare Verbindung von Schubstrebe 4 und Spannarm 8, die am Spannkörper drehbar gelagerten Spannarme 8 zwangsweise und konzentrisch radial X-förmig nach aussen zur Rohrinnenwand. Sobald die Ringkolben 2 druckseitig entlastet werden, übernehmen die an ihnen vorderseitig angebrachten Druckfedern 6 das Zurückgleiten der Ringkolben 2 in die urspüngliche Lage und die Spannarme schwenken zwangsweise radial zum Spannkörper 1 zurück.

## Patentansprüche

1. Verspannvorrichtung zu Fräsgerät, bestehend aus einem rohrförmigen Spannkörper (1) und einer von diesem umschlossenen Führungsstange (13) mit integrierter Bohrung für die Speisung mit einem Arbeitsmedium (14), **dadurch gekennzeichnet, dass** im Spannkörper (1) zwei spiegelbildlich axial bewegliche Ringkolben (2) angeordnet sind, die über Kniehebel die am Spannkörper (1) an einem Ende drehbar fixierten Spannarme (8) verbinden, so dass bei Druckbeaufschlagung auf die beiden Ringkolben (2) über eine Bohrung (11) im Mittelteil des Spannkörpers (1) die Spannarme (8) annähernd X-förmig radial nach aussen zur konzentrischen Verspannung des Spannkörpers (1) im Rohr gedrückt werden.

2. Verspannvorrichtung zu Fräsgerät nach Anspruch 1, **dadurch gekennzeichnet, dass** im dickwandigen Mittelteil des Spannkörpers (1) zur Aufnahme der Ringkolben (2) beidseitig spiegelbildlich axial angeordnete Führungsrohre (3) fixiert sind, und dass die beiden Ringkolben (2) im gleitenden Kontakt zwischen Innenmantel des Spannköpers (1) und dem Aussenmantel des Führungsrohres (3) stehen.

3. Verspannvorrichtung zu Fräsgerät nach Anspruch 1, **dadurch gekennzeichnet, dass** die Ringkolben (2) in der vom Mittelteil des Spannkörpers (1) abgewandten Stirnseite 2 bis 8, vorzugsweise 3 bis 5, nutförmige Ausfräsungen aufweisen, die den ringförmigen Kolbenmantel (2) durchbrechen und durch Bolzen (5) die drehbare Aufnahme der Schubstreben (4) bilden.

4. Verspannvorrichtung zu Fräsgerät nach Anspruch 3, **dadurch gekennzeichnet, dass** die Ringkolben (2) in der vom Mittelteil des Spannkörpers (1) abgewandten Stirnseite zu den nutförmigen Ausfräsungen radial versetzt angeordnete 2 bis 8, vorzugsweise 3 bis 5 Sackbohrungen zur Aufnahme von Druckfedern (6) aufweisen.

5. Verspannvorichtung zu Fräsgerät nach Anspruch 1, **dadurch gekennzeichnet, dass** zwischen Ringkolben (2) und einer Schubstrebe (4) einerseits und zwischen dieser Schubstrebe (4) und Spannarm (8) andererseits ein Kniehebel gebildet wird, so dass bei Beaufschlagung des Ringkolbens (2) die Spannarme radial nach aussen gespreizt werden.

6. Verspannvorrichtung zu Fräsgerät nach Anspruch 2, **dadurch gekennzeichnet, dass** die beiden Führungsrohre (3) flanschförmig ausgebildet sind und an der Flanschinnenseite in Richtung Mittelteil des Spannkörpers (1) 2 bis 8, vorzugsweise 3 bis 5 Sacklöcher zur Abstützung der Druckfedern (6) aufweisen.

## Claims

1. Blocking device for a milling machine, consisting of a tube-shaped blocking body (1) and a guiding bar (13) encased by same with an integrated bore for the supply with a working medium, **characterised in that** two mirror-inverted axially moveable annular pistons (2) are arranged in the blocking body (1) which connect through elbow levers blocking arms (8) fixed rotatably at one end to the blocking body (1), so that upon a pressure action acting through a bore (11) in the centre part of the blocking body (1) onto both annular pistons (2) the blocking arms (8) are urged in a approximately X-shaped fashion radially outward to a concentric blocking of the blocking body (1) in the tube.

2. Blocking device for a milling machine according to claim 1, **characterised in that** at both sides mirror-inverted axially arranged guide tubes (3) are fixed in the thick-walled centre part of the blocking body (1) for the receipt of the annular pistons (2), and **in that** the two annular pistons (2) are in a sliding contact between the inner jacket of the blocking body (1) and the outer jacket of the guide tube (3).

3. Blocking device for a milling machine according to claim 1, **characterised in that** the annular pistons (2) comprise at the end surface (2) facing away from the centre part of the blocking body 2 to 8, preferably 3 to 5 groove shaped machined recesses which penetrate the piston jacket (2) and form by bolts (5) the rotatable receipt of the pushing struts (4).

4. Blocking device for a milling machine according to claim 3, **characterised in that** the annular pistons (2) comprise at the end surface facing away from the centre part of the blocking body (1) 2 to 8, preferably 3 to 5 blind bores for the receipt of pressure springs (6) arranged radially offset relative to the groove shaped machined recesses.

5. Blocking device for a milling machine according to claim 1, **characterised in that** a elbow lever is formed at the one hand between annular piston (2) and a pushing strut (4) and at the other hand between this pushing strut (4) and the blocking arms (8), so that upon a pressure acting onto the annular piston (2) the blocking arms are radially spread outwards.

6. Blocking device for a milling machine according to claim 2, **characterised in that** the two guiding tubes (3) are of a flange shaped design and comprise at the flange inner side in direction of the centre part of the blocking body (1) 2 to 8, preferably 3 to 5 blind bores for the supporting of the pressure springs (6).

## Revendications

1. Dispositif de blocage pour fraiseuse, avec un corps tubulaire d'immobilisation (1) entourant une tringle-guide (13) percée d'un passage pour l'alimentation en un fluide d'actionnement (14), **caractérisée en ce que** deux pistons annulaires (2) axialement mobiles de façon énantiomorphe sont agencés dans le corps d'immobilisation (1) et réunissent par l'intermédiaire de leviers à genouillère des bras de tension (8) fixés à une de leurs extrémités au corps d'immobilisation de façon à pouvoir pivoter par rapport à celui-ci, de manière à ce que lorsque les deux pistons annulaires (2) sont actionnés par la pression d'un fluide transmis à travers un passage (11) ménagé dans la partie médiane du corps (1), les bras de tension (8) s'étendent radialement vers l'extérieur et approximativement en forme de X pour bloquer le corps (1) de façon concentrique dans le tuyau.

2. Dispositif de blocage selon la revendication 1, **caractérisée en ce qu'**il comporte des tubes de guidage (3) axialement énantiomorphes disposés des deux côtés dans la partie centrale à paroi épaisse du corps d'immobilisation (1) pour recevoir les pistons annulaires (2), et **en ce que** ceux-ci sont agencés en contact glissant entre le surface intérieure de la paroi du corps (1) et la surface extérieure du tube de guidage (3).

3. Dispositif de blocage selon la revendication 1, **caractérisé en ce que** les pistons annulaires (2) comportent sur leur surface frontale éloignée de la partie centrale du corps (1) d'immobilisation 2 à 8, et de préférence 3 à 5, rainures fraisées dans le manteau du piston annulaire (2) pour recevoir les jambes de force (4) pivotant autour de chevilles (5).

4. Dispositif de blocage selon la revendication 3, **caractérisé en ce que** les pistons annulaires comportent sur leur surface frontale éloignée de la partie centrale du corps d'immobilisation (1) 2 à 8, et de préférence 3 à 5, trous borgnes décalés par rapport aux rainures pour recevoir des ressorts (6) travaillant à la compression.

5. Dispositif de blocage selon la revendication 1, **caractérisé en ce qu'**un levier à genouillère est formé entre le piston annulaire (2) et une jambe de force (4) d'une part et entre cette jambe de force (4) et un bras (8) d'autre part, de manière à ce que les bras s'écartent vers l'extérieur lorsque le piston annulaire (2) est actionné.

6. Dispositif selon la revendication 2, **caractérisé en ce que** les deux tubes de guidage (3) forment des flasques et que 2 à 8, et de préférence 3 à 5, trous borgnes sont prévus à leur surface intérieure orientée vers le milieu du corps (1), pour maintenir les ressorts à compression (6).
